# EUROPEAN PATENT APPLICATION

(11) **EP 4 024 303 A1**
(43) Date of publication of application: **06.07.2022**
(21) Application number: 21204015.8
(22) Date of filing: 21.10.2021
(51) Int. Cl.: G06Q 10/08, G06Q 50/28, B65G 63/00

(54) **SYSTEM AND METHOD FOR AN INLAND PORT USING HYPERLOOP**

(30) Priority: 05.01.2021 US 202163134168 P; 05.01.2021 US 202117495039
(71) Applicant: Hyperloop Technologies, Inc., Los Angeles CA 90021 (US)
(72) Inventor: Zhang, Dapeng, Los Angeles, 90021 (US)
(74) Representative: Hafner & Kohl PartmbB

(57) **Abstract**

The disclosed solution provides for an inland port that is configured to load and unload cargo using autonomous systems (including autonomous tractors). The inland port may be serviced by a hyperloop network (of hyperloop routes) between the seaport and the inland port. The disclosed solution may rely on autonomous hyperloop vehicles in the hyperloop network to transport the cargo containers between the seaport and the inland port. At both the seaport and the inland port, autonomous tractors may, in some implementations, be utilized to load and unload the cargo that will be carried by the hyperloop vehicle and/or the truck.

## Description

### CROSS-REFERENCE TO RELATED APPLICATIONS

The present application claims priority to United States Provisional Patent Application No. 63/134,168, filed on January 5, 2021, and entitled "System and Method for an Inland Port Using Hyperloop," the entire contents of which are hereby incorporated by reference.

### BACKGROUND

Modern seaports are capable of transporting countless tons of cargo per year. However, the number of seaports is not increasing as quickly as the demand for transported goods. As such, many ports are becoming unduly congested, thus leading to delays in entire supply chains. In September 2021, the City of Los Angeles, United States experienced a record number of container-laden ships being forced to wait at sea while the local seaports were busy unloading goods. At peak demand, approximately sixty ships were waiting at sea. Given that Los Angeles is the busiest port in the United States for Asian-based imports, the international economic cost is substantial. Due to the global pandemic of COVID-19, similar situations are happening across the globe as consumers have shifted their spending toward goods and away from services.

Cargo loading and unloading operations are generally sequential and require careful coordination among the various actors and machinery handling the cargo. Any delay in one step in the process has a cascade effect on the subsequent steps. For example, when a ship arrives at a berth, a tractor retrieves cargo from the ship and transfers the cargo to a land vehicle (e.g., a truck). Tractors are managed by human operators, thus causing delays. Further, delays may occur with the trucks designed to receive the cargo. Since the trucks are operated by humans, any number of factors may delay the pickup of cargo. Human operators may be sick and unable to attend to the waiting cargo. Likewise, human operators may cause a collision at the seaport because the layout of seaports is often very congested due to land use restrictions.

Even if the seaport may be easily navigated, another delay arises with respect to road access. The seaport is often not close to a convenient highway or other high-speed route. Therefore, trucks are often required to navigate narrow, slow, and congested surface streets in order to access high-speed, uncongested routes. As such, trucks face delays not only in receiving goods within a crowded seaport but also when travelling from the seaport to the nearest high-speed route. Similar problems exist for traditional rail that serves seaports. Often, the traditional rail issues may be more pernicious than that faced by trucks because rails require high amounts of infrastructure that simply is not being updated to keep pace with outsized demands placed on seaports. Further, such lack of increased infrastructure is due to the fact that traditional rail moves at velocities that are often lower than truck-based travel, thus disincentivizing resource allocation since the return on investment is not any better than investing in road-based solutions (e.g., trucks).

Many of the aforementioned problems may be addressed via use of hyperloop-based transportation. Hyperloop is a passenger and cargo transportation system relying on a sealed tube and a bogie attached to a vehicle (i.e., a hyperloop vehicle). The sealed tube has a substantially lower air pressure than the external environment. In some implementations, the sealed tube may have a near-vacuum environment, thus reducing air resistance to the hyperloop vehicle. Such an environment leads to increases in energy efficiency as well as performance. Further, the acceleration and the velocity of the hyperloop vehicle may be substantially higher than a comparable hyperloop vehicle operating within a gas environment with a higher pressure.

Some hyperloop systems rely on magnetic levitation (sometimes referred to as "maglev"). Maglev relies on an electromagnetic engine designed to create electromagnetic force to propel the hyperloop vehicle with highly minimized friction (i.e., in some situations the friction is substantially zero). In other words, the resistance between a traditional wheel and a traditional rail is eliminated by using a maglev-based bogie. Hyperloop is in the early stages of development and commercialization. However, the projected velocity of the bogie may exceed 1,080 km/h in commercialized implementations.

Given the capabilities of hyperloop to move cargo and passengers, a solution is available to address the challenges of transferring cargo at seaports. What is needed is a system and method for using hyperloop technology to transport cargo at a seaport via use of an inland port that supports hyperloop-based transportation of cargo.

### SUMMARY

A method is disclosed for transporting cargo using a hyperloop system having at least one hyperloop route. The method may determine, at a processor, the availability of a hyperloop vehicle to transfer a first cargo shipping container located at a first location. The method may then dispatch, at the processor, the hyperloop vehicle, via the hyperloop route, to a first hyperloop vehicle bay proximate to the first location, wherein the first hyperloop vehicle bay is proximate to a first tractor. The method may further determine, at the processor, the availability of the first tractor to transfer the first cargo shipping container between the first tractor and the hyperloop vehicle. The method may then dispatch, at the processor, the first tractor to transfer the first cargo shipping container between the hyperloop vehicle and the first tractor, and then dispatch, at the processor, the hyperloop vehicle, via the hyperloop route, to a second hyperloop vehicle bay proximate to a second location, wherein the second hyperloop vehicle bay is proximate to a second tractor. The method may then determine, at the processor, the availability of the second tractor to transfer the first cargo shipping container between the second tractor and the hyperloop vehicle, and then dispatch, at the processor, the second tractor to transfer the first cargo shipping container between the second tractor and the hyperloop vehicle. The method may then dispatch, at the processor, the hyperloop vehicle along the hyperloop route.

The method may be such that the hyperloop vehicle is configured to receive dispatching commands to invoke autonomous operations within the hyperloop vehicle. The method may be such that the first tractor and the second tractor are configured to receive dispatching commands to invoke autonomous operations within the first tractor and the second tractor, respectively. The method may further determine the availability of the hyperloop vehicle by performing a safety check of the hyperloop vehicle and notifying a fleet management center if the safety check fails to pass.

The method may be such that the first location is a seaport and the second location is an inland port. The method may further gather, at the processor, data related to the transporting of first cargo shipping container via the hyperloop route, store the data in a memory, generate, at the processor, analytic data on said data, and present the analytic data on a computer display. The method may be such that the transferring performed by the first tractor is to load cargo into the hyperloop vehicle, and the transferring performed by the second tractor is to unload cargo from the hyperloop vehicle.

The method may further determine, at the processor, the availability of the first cargo shipping container based on data contained within the first cargo shipping container, wherein the data is indicative of contents inside the first cargo shipping container, the weight of the first cargo shipping container, the dimensions of the first cargo shipping container, the destination of the first cargo shipping container, or a combination thereof. The method may be such that determining the availability of the hyperloop vehicle is based on a carrying capacity of the hyperloop vehicle, wherein the carrying capacity is greater than or equal to the weight of the first cargo shipping container and the cargo contained therein. The method may further dispatch the first tractor to store the first cargo shipping container at a first cargo storage facility if the hyperloop vehicle is determined to be unavailable, wherein the cargo storage facility is proximate to the first tractor, and the method may further dispatch the second tractor to store the first cargo shipping container at a second cargo storage facility if a truck is determined to be unavailable to receive the first cargo shipping container.

A server is disclosed for transporting cargo using a hyperloop system having at least one hyperloop route. The server may determine, at a processor, the availability of a hyperloop vehicle to transfer a first cargo shipping container located at a first location. The server may then dispatch, at the processor, the hyperloop vehicle, via the hyperloop route, to a first hyperloop vehicle bay proximate to the first location, wherein the first hyperloop vehicle bay is proximate to a first tractor. The server may further determine, at the processor, the availability of the first tractor to transfer the first cargo shipping container between the first tractor and the hyperloop vehicle. The server may then dispatch, at the processor, the first tractor to transfer the first cargo shipping container between the hyperloop vehicle and the first tractor, and then dispatch, at the processor, the hyperloop vehicle, via the hyperloop route, to a second hyperloop vehicle bay proximate to a second location, wherein the second hyperloop vehicle bay is proximate to a second tractor. The server may then determine, at the processor, the availability of the second tractor to transfer the first cargo shipping container between the second tractor and the hyperloop vehicle, and then dispatch, at the processor, the second tractor to transfer the first cargo shipping container between the second tractor and the hyperloop vehicle. The server may then dispatch, at the processor, the hyperloop vehicle along the hyperloop route.

The server may be such that the hyperloop vehicle is configured to receive dispatching commands to invoke autonomous operations within the hyperloop vehicle. The server may be such that the first tractor and the second tractor are configured to receive dispatching commands to invoke autonomous operations within the first tractor and the second tractor, respectively. The server may further determine the availability of the hyperloop vehicle by performing a safety check of the hyperloop vehicle and notifying a fleet management center if the safety check fails to pass.

The server may be such that the first location is a seaport and the second location is an inland port. The server may further gather, at the processor, data related to the transporting of first cargo shipping container via the hyperloop route, store the data in a memory, generate, at the processor, analytic data on said data, and present the analytic data on a computer display. The server may be such that the transferring performed by the first tractor is to load cargo into the hyperloop vehicle, and the transferring performed by the second tractor is to unload cargo from the hyperloop vehicle.

The server may further determine, at the processor, the availability of the first cargo shipping container based on data contained within the first cargo shipping container, wherein the data is indicative of contents inside the first cargo shipping container, the weight of the first cargo shipping container, the dimensions of the first cargo shipping container, the destination of the first cargo shipping container, or a combination thereof. The server may be such that determining the availability of the hyperloop vehicle is based on a carrying capacity of the hyperloop vehicle, wherein the carrying capacity is greater than or equal to the weight of the first cargo shipping container and the cargo contained therein. The server may further dispatch the first tractor to store the first cargo shipping container at a first cargo storage facility if the hyperloop vehicle is determined to be unavailable, wherein the cargo storage facility is proximate to the first tractor, and the server may further dispatch the second tractor to store the first cargo shipping container at a second cargo storage facility if a truck is determined to be unavailable to receive the first cargo shipping container.

### BRIEF DESCRIPTION OF DRAWINGS

The accompanying drawings, which are incorporated herein and constitute part of this specification, illustrate exemplary aspects of the claims, and together with the general description given above and the detailed description given below, serve to explain the features of the claims.
FIG. 1 illustrates a block diagram of a seaport connected to an inland port.
FIG. 2A illustrates a block diagram of pluralities of hyperloop vehicle bays located within a seaport.
FIG. 2B illustrates a block diagram of an inland port connected by a hyperloop route.
FIG. 2C illustrates a block diagram of an inland port equipped with a cargo storage facility.
**FIG. 3A** illustrates a process for transferring cargo to or from a hyperloop vehicle.
**FIG. 3B** illustrates a process for transporting cargo within a hyperloop system.
**FIG. 4** is a block diagram illustrating an example computing device suitable for use with the various aspects described herein.
**FIG. 5** is a block diagram illustrating an example server suitable for use with the various aspects described herein.

### DETAILED DESCRIPTION

Various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

As disclosed in the background, seaports have many existing issues that result in supply chain bottlenecks and failures. One additional problem that exists is the logistical planning around truck-based transportation. In the current state of the art, autonomous systems are being deployed in various contexts. However, most trucks operating at seaports are driven by human drivers. As such, human, seaport operators must rely on commands that are sent to the human drivers (e.g., voice commands communicated via wireless radio). Some solutions rely on text-based terminals within the truck such that the driver may read a command from a terminal (e.g., proceed to loading dock A to receive cargo container X).

Even with highly coordinated operations, the reliance on truck-based cargo unloading and loading lacks the scale and efficiency offered by hyperloop. Assuming that truck-based transportation may be replaced with autonomous, artificial-intelligence drivers, the seaport operators are still commanding a fleet of trucks that operate much like human drivers. In other words, the advent of autonomous drivers for trucks will not change the situation at the seaports because no overarching command and control system exists, i.e., each truck is its own atomic unit within a complex system of actors.

The disclosed solutions provide an answer to the lack of coordination among the trucks and tractors at seaports. Instead of relying on the potential, unrealized advances of autonomous driving, the disclosed solution provides a system that utilizes an inland port that is connected via a substantially autonomous hyperloop system (or hyperloop network). Each hyperloop vehicle may be configured to operate in a coordinated manner among the other hyperloop vehicles such that seaport unloading and loading may be performed without the reliance on trucks being at the seaport itself.

Seaport real estate is finite. In simple geographic terms, the coastal areas of the world are limited. When viewed at a city level, a tiny fraction of a city may abut the coast, where a seaport may be located. Trucks require space to operate that is at least as large as the cargo containers carried on ships. Further, each truck is equipped with a power plant (i.e., engine) that likewise takes up space. Still further, the truck requires a human operator within the vehicle. Said human operators require climate control, seating, safety devices, and sometimes even sleeping areas. When extrapolated, one of skill in the art can appreciate that a non-trivial amount of space is consumed by the mere fact that dozens of trucks are simply occupying space in the seaport-and such space is limited at seaports.

Hyperloop offers a solution to the problems introduced by having a human driver. Hyperloop vehicles may be implemented as autonomous vehicles such that the space required by human operators is completely eliminated. In other words, no space is required for a hyperloop vehicle to carry drivers. As such, more of the hyperloop vehicle may be allocated to carrying cargo rather than serving the needs of a human driver (e.g., airbags, radio systems, windshields, mirrors, etc.).

Trucks largely rely on fossil fuels. As a consequence, trucks emitted large amounts of CO₂ and pollutants (such as CO, in less-developed parts of the world). When idling to wait for cargo loading and unloading operations, engines idle and continue to emit exhaust. Such pollutants fill the air at the seaport, which is often located next to populated areas. Thus, the effect on human health is a large problem for citizens of nearby metropolitan areas.

In stark contrast, the disclosed solution relies on highly efficient and clean electric engines. The power plant (or engine) of the hyperloop vehicle is highly efficient and optimized for transportation. A hyperloop vehicle may rely on electric propulsion such that the power plant is compact and power efficient. Unlike a traditional combustion engine used in trucks, the hyperloop vehicle relies on battery power. Such electric-powered vehicles provide for zero emissions at the seaport, thus alleviating the problem of combustion-based engines emitting exhaust that imperils human health.

Road congestion at the seaport is another pernicious problem. As stated, seaports are crowded and located on land that is limited. Roadways must be deployed to service trucks. However, such roadways are highly unoptimized. Each roadway requires enough space to enable a truck to drive. As such, the roadways are oversized when compared to smaller roads that may be utilized by passenger vehicles. Yet another issue prevails; the roadways for trucks have slow throughput. In general, the seaports are not connected to high-speed roadways (e.g., a freeway). Therefore, the truck is required to navigate low-speed roadways before accessing high-speed roadways.

The disclosed solution provides a hyperloop-based cargo unloading and loading solution that eliminates the problem of low-speed roadways that slow down the movement of trucks. Hyperloop may operate at much higher speeds immediately after loading or unloading cargo. Stated differently, the disclosed solution provides the equivalent of high-speed roadways being positioned proximate to the site of cargo loading and unloading. Further, the disclosed solution may rely on what is termed a hyperloop portal that enables low-speed operation of the hyperloop vehicles, sometimes without full stops. In other words, the hyperloop vehicles, in some implementations, may be loaded and unloaded at lower speeds by autonomous tractors configured to operate with moving vehicles. No such solution exists for truck-based operation because of the human-based issues related to relying on human drivers.

Traditional rail has equally as many issues as trucks. Rail is slow. Given the large mass of railway vehicles, the starting and stopping of the railway vehicles consumes not only power but time. Like trucks, railway vehicles rely largely on fossil fuel. Further, railway vehicles require human operators. Some additional problems, however, are unique to rail.

Railway vehicles are chained together such that several dozen railcars must be connected to carry cargo. In other words, a railway vehicle is a convoy of at least one railway locomotive and several railway cars. Each car likely has a different destination and will require disconnection or additional loading and unloading operations.

The disclosed solution provides for autonomous hyperloop vehicles that may, in some configurations, have a one-to-one relationship with the cargo container. Thus, the hyperloop vehicle may be configured to be optimized for cargo delivery of a single container. By separating each cargo container in a logistical manner, the hyperloop vehicle may deliver its cargo without substantial consideration of other cargo containers (unlike railway vehicles).

Traditional roadways and traditional rail require routes that are exposed to the elements. For example, roads are subject to freezing, thawing, ultraviolet rays, compression damage, seismic shifting, flooding, icing, etc. In short, roadways and railways introduce not only maintenance issues but also safety issues.

The disclosed solution provides for a hyperloop vehicle that is enclosed in a sealed tube. In some configurations, the tube may be designed out of high-density, high-strength concrete that requires a fraction of the maintenance as exposed roadways and railways. Even with traditional concrete or metals, the hyperloop tube protects the actual rails inside from the elements. Therefore, once the hyperloop is installed, a highly reduced amount of maintenance is required.

Human drivers imply human fatalities. Collisions and other accidents cause human injuries and sometimes deaths. Even when one ignores the humanity of risking human lives, the economic costs are high. For instance, when drivers are injured, an operating company may be liable for medical costs and wrongful death claims. As such, insurance costs affect profitability. Further, a decrease in productivity is immediately felt by the operating company.

The disclosed solution provides for autonomous operation of hyperloop vehicles and autonomous operation of tractors. By eliminating the human drivers from the system, human injuries and fatalities may be reduced, if not eliminated. One advantage of the disclosed solution is reliance on a sealed-tube structure. In some implementations, the hyperloop tube is sealed to create a near-vacuum environment, into which human operators are generally forbidden. Thus, a collision between a human and the hyperloop vehicle is unlikely. Therefore, the disclosed solution provides not only for safer conditions for human operators but also reduced costs due to accidents causing harm to humans.

The aforementioned problems are both numerous and varied. However, the disclosed solution addresses each, as discussed herein. At a high level, the disclosed solution provides for an inland port that is configured to load and unload cargo using autonomous systems (including autonomous tractors). The inland port may be serviced by a hyperloop network (of hyperloop routes) between the seaport and the inland port. The disclosed solution relies on autonomous hyperloop vehicles in the hyperloop network to transport the cargo containers between the seaport and the inland port. At both the seaport and the inland port, autonomous tractors may, in some implementations, be utilized to load and unload the cargo that will be carried by the hyperloop vehicle and/or the truck.

Such an inland port may be connected by a hyperloop route that runs from the seaport to the inland port (and vice versa to form a loop). In one aspect, the hyperloop vehicles receive cargo from the ships at the seaports and deliver said cargo to the inland port, at which point the cargo may be stored or immediately loaded into vehicles (e.g., a shipping-container-configured trucks). The inland port may be located near a major highway or freeway such that vehicles may quickly access and depart from the inland port. Likewise, the inland port may have cargo storage facilities such that containers may be stacked until being either transported by a vehicle or carried by a hyperloop vehicle to another destination. In one aspect, a plurality of seaports may be interconnected to a plurality of inland ports, thus forming a mesh of connected cargo transfer locations.

The details of the disclosed solution are provided in the following figures and description. In view of the aforementioned problems, one of skill in the art can appreciate the long-felt need addressed by the disclosed solution. Skilled technicians may alter the implementation of the disclosed solution without departing from the design, details, and aspects disclosed herein.

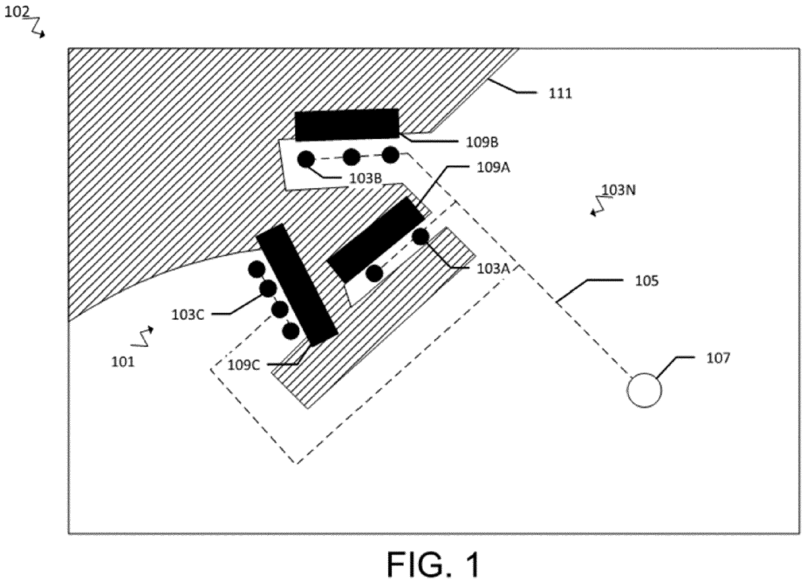

**FIG. 1** illustrates a block diagram of a seaport 101 connected to an inland port 107 as part of a hyperloop system 102. The hyperloop system 102 may be understood to be the system-level abstraction of the various elements within the instant figure viz. a seaport 101, an inland port 107, a fleet management center 145, a hyperloop vehicle 110, berths, tractors, roadways, railways, etc. The hyperloop system 102 is denoted as such throughout the figures and shall be used to refer to the solution at a high level. However, one of skill in the art will appreciate that various levels of abstraction may be similar without departing from the scope and spirit of the instant solution disclosed herein.

The seaport 101 may be connected to the inland port 107 by a hyperloop route 105. The hyperloop route 105 may have a number of hyperloop vehicles (e.g., the hyperloop vehicle 110) moving between the seaport 101 and the inland port 107. In one aspect, the hyperloop route 105 may have single-direction segments, bidirectional segments, or a combination thereof.

The seaport 101 is adjacent to a body of water 111. The body of water 111 is one of the many physical constraints on the layout and use of the seaport 101. One of skill in the art will appreciate that the seaport 101 has little room to expand, given the surrounding metropolitan area and the body of water 111. Further, the seaport 101 may be adjacent to areas that are dense with humans, thus creating risks to human wellbeing and human health. However, the inland port 107, in some implementations, may be located at a site remote from dense metropolitan areas.

A plurality of hyperloop vehicle bays 103N may be located within the seaport 101. The plurality of hyperloop vehicle bays 103N is denoted with black circles in the instant figure. One of skill in the art will appreciate that any number of hyperloop vehicle bays may be located within or near the seaport 101 based on a number of factors including but not limited to: cargo throughput, cargo weight, vehicle availability, tractor availability, physical space, electricity supply, proximity to loading equipment, weather conditions, etc.

The plurality of hyperloop vehicle bays 103N may have a number of autonomous loading and unloading tractors disposed nearby. For instance, the autonomous tractors may be configured to load and unload cargo between the hyperloop vehicle 110 and the dock. However, some tractors may be substantially operated by humans, in one aspect, in order to more quickly realize the benefits of the disclosed solution without additional equipment construction in the near term. For instance, a manually operated tractor may still load and unload cargo at the autonomous hyperloop vehicle 110.

The plurality of hyperloop vehicle bays 103N may have a first hyperloop vehicle bay 103A, a second hyperloop vehicle bay 103B, and a third hyperloop vehicle bay 103C. The hyperloop vehicle bays 103A, 103B, 103C are merely illustrative for the instant disclosure and shall be referenced throughout. However, one of skill in the art will appreciate that more or fewer hyperloop vehicle bays may be distributed throughout the seaport 101. Further, additional pluralities of hyperloop vehicle bays (e.g., the plurality of hyperloop bays 103N) may be deployed throughout the seaport 101 in order to address the logistical needs of the seaport 101.

The hyperloop vehicle bay 103A may be located near a plurality of berths 109A. Further, the hyperloop vehicle bay 103B may be located near a plurality of berths 109B. Still further, the hyperloop vehicle bay 103C may be located near a plurality of berths 109C. The pluralities of berths 109A, 109B, 109C are generally configured to enable the docking of ships, the offloading of cargo, the loading of cargo, the servicing of ships, the weighing of cargo, the transfer of cargo by tractor, etc. One of skill in the art will appreciate that the configuration of a modern berth varies across the world but generally serves the purpose of moving cargo between land and sea. As shown, the pluralities of berths 109A, 109B, 109C may be nearer to or farther from the hyperloop vehicle bay 103A depending on the configuration of the seaport 101.

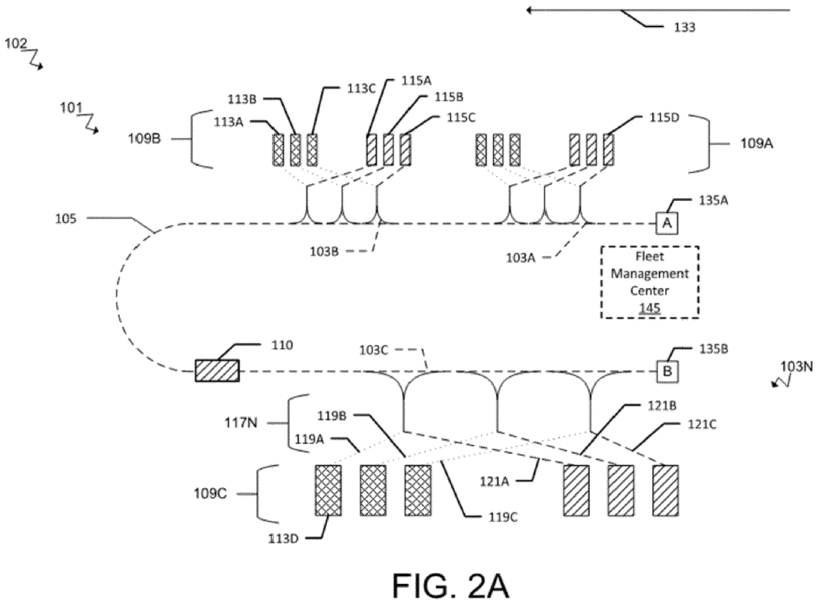

**FIG. 2A** illustrates a block diagram of the pluralities of hyperloop vehicle bays 103N located within the seaport 101 as part of the hyperloop system 102. Those skilled in the art may refer to the pluralities of vehicle bays 103N as a portal. Likewise, those skilled in the art may blur the distinction between the seaport 101 and the pluralities of hyperloop vehicle bays 103N such that the seaport 101 may be referred to as a portal in some cases.

A fleet management center 145 may be positioned near the seaport 101 in order to manage, via a plurality of autonomous systems, the operations of the seaport 101 (as well as remote inland ports). One of skill in the art will appreciate that the fleet management center 145 may be located almost anywhere given that communication between the seaport 101 and the inland port 107. As such, the fleet management center 145 is denoted with dotted lines throughout the figures contained herein to indicate such optionality.

A direction of travel 133 is denoted to indicate how, in one aspect, a hyperloop vehicle (e.g., the hyperloop vehicle 110) may travel along the hyperloop route 105. One of skill in the art will appreciate that the direction of travel 133 may be reversed or be bidirectional. A waypoint 135A provides reference for the instant disclosure. Further, a waypoint 135B provides reference for the instant disclosure. In one aspect, a hyperloop vehicle (e.g., the hyperloop vehicle 110) may pass through waypoint 135A and proceed to the waypoint 135B such that each of the hyperloop vehicle bays 103A, 103B, 103C may be visited by the hyperloop vehicle 110.

The plurality of berths 109B may have a first receiving berth 113A, a second receiving berth 113B, and a third receiving berth 113C. The receiving berths 113A, 113B, 113C are generally configured to receive cargo from ships and place said cargo substantially directly into the hyperloop vehicle 110. By reducing the amount of time that the cargo containers wait for loading and unloading, the disclosed solution provides for higher throughput of cargo containers on both the receiving and sending sides of the supply chain served by the hyperloop system 102.

The plurality of berths 109B may further have a first sending berth 115A, a second sending berth 115B, and a third sending berth 115C. The sending berths 115A, 115B, 115C are generally configured to load cargo onto departing ships i.e., the cargo is loaded from land (e.g., the dock) onto the ship. The hyperloop vehicle 110 may be unloaded by the nearby tractors that are configured to autonomously unload the cargo and then load the cargo into a waiting ship. One of skill in the art will appreciate that the reduction in waiting time provides higher throughput of cargo containers as well as ships. Therefore, suboptimal situations may be avoided where ships are waiting at sea in order to dock while the existing solutions slowly load and unload cargo at the seaport 101.

In the disclosed hyperloop system 102, many of the receiving berths and sending berths are unlabeled in the instant figure for clarity of explanation; however, one of skill in the art will appreciate that more or fewer berths may be disposed within the seaport 101. Similar components in the instant figure serve similar functionality even though not labeled. Such omission of labels is merely to provide clarity for the instant figure and not to limit the solution disclosed.

The plurality of berths 109A may have a first sending berth 115D. The plurality of berths 109C may have a first receiving berth 113D. As shown in the plurality of berths 109C, a plurality of tractors 117N may provide transportation of cargo between a hyperloop vehicle bay (e.g., the hyperloop vehicle bay 103C) and the plurality of berths 109C. The plurality of tractors 117N may be configured such that autonomous operation may be utilized to load and unload cargo. For example, an autonomous tractor may approach the hyperloop vehicle 110, wait for the hyperloop vehicle 110 to expose the cargo, and unload the cargo from the hyperloop vehicle 110. Then, the hyperloop vehicle 110 may depart to carry out another operation (e.g., load cargo).

The plurality of tractors 117N may have a first receiving tractor 119A, a second receiving tractor 119B, and a third receiving tractor 119C. Further, the plurality of tractors 117N may have a first sending tractor 121A, a second sending tractor 121B, and a third sending tractor 121C. The plurality of tractors 117N may be similar to the pluralities of tractors as shown in the instant figure. The plurality of tractors 117N are generally configured to move cargo to and from the hyperloop vehicles stopped at the plurality of hyperloop vehicle bays 103N. In one aspect, the plurality of tractors 117N may be human operated, even though such operation may be less optimal and more error-prone than autonomous solutions for the plurality of tractors 117N.

In an illustrative scenario, the hyperloop vehicle 110 may pass through the waypoint 135A along the direction of travel 133. The hyperloop vehicle 110 may contain a shipping container which is marked for departure at the hyperloop vehicle bay 103A. The sending berth 115D may be connected to the hyperloop vehicle bay 103A and offer a point of departure for the cargo container. The hyperloop vehicle 110 may stop at the hyperloop vehicle bay 103A using autonomous systems. Next, the hyperloop vehicle 110 may deliver cargo to the berth 115D via a tractor operable to extract cargo from the hyperloop vehicle 110 and place the cargo onto the ship docked at the berth 115D.

In the instant illustrative example, the hyperloop vehicle 110 may then resume travelling along the hyperloop route 105, in the direction of travel 133. Upon reaching the hyperloop vehicle bay 103B, the hyperloop vehicle 110 may stop at the hyperloop vehicle bay 103B and receive cargo from the receiving berth 113C. The cargo may be offloaded from the ship docked at the berth 113C and placed in the hyperloop vehicle 110. The hyperloop vehicle 110 may then resume travel toward the waypoint 135B. In the instant example, the hyperloop vehicle 110 may pass by the hyperloop vehicle bay 103C because the hyperloop vehicle 110 is already fully laden and heading toward the inland port 107. In one aspect, the fleet control center 145 may determine any remaining capacity of the hyperloop vehicle 110; however, in this example, the remaining capacity is zero.

The various tractors within the pluralities of tractors 117N may be autonomously operated via the fleet management center 145. The fleet management center 145 may have computerized, autonomous systems configured to manage the coordination between the plurality of tractors 117N and the hyperloop vehicle 110. For example, the fleet management center 145 may have autonomous-management systems configured to cause a tractor to engage in an unloading operation for the hyperloop vehicle 110 viz. removing the cargo from the hyperloop vehicle 110 and placing the cargo into a ship.

One advantage of centrally locating management of the seaport 101 at the fleet management center 145 is a coordination among the various elements within the seaport 101 (and hyperloop system 102 as a whole). For instance, the plurality of tractors 117N may be notified of the arrival of the hyperloop vehicle 110 at the hyperloop vehicle bay 103C prior to arrival such that the plurality of tractors 117N may begin preliminary operations (e.g., approaching the point of arrival of the hyperloop vehicle 110 at the hyperloop vehicle bay 103C).

Another advantage of the fleet management center 145 is the autonomous reporting of faults (or errors) within the hyperloop system 102. For example, the hyperloop vehicle 110 may encounter a maintenance issue and be halted on the route 105 such that upstream hyperloop vehicles (not shown) are stopped. The fleet management center 145 may halt operations of the plurality of tractors 117N at the plurality of berths 109C in order to optimize operations while the maintenance issue is resolved. When the hyperloop vehicle 110 has the maintenance issue resolved (e.g., the hyperloop vehicle 110 is stabled), the fleet management center 145 may invoke logic to resume operations of the plurality of tractors 117N at the plurality of berths 109C, thus allowing the upstream hyperloop vehicles (not shown) to resume locomotion.

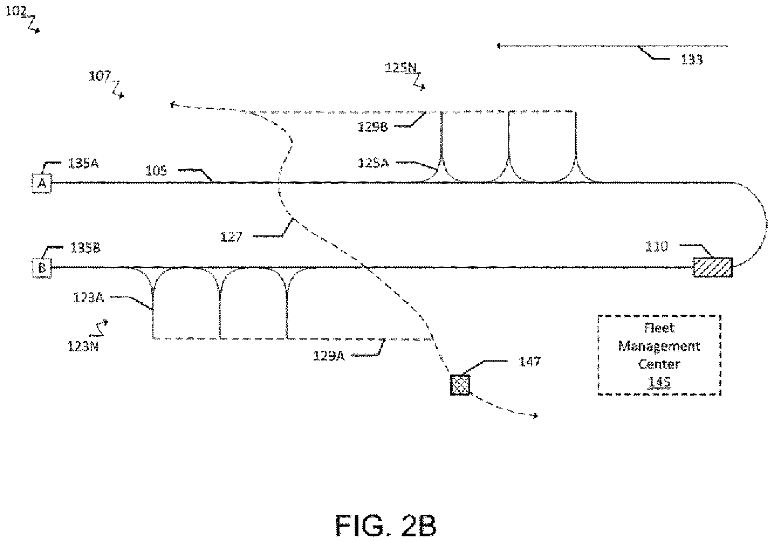

**FIG. 2B** illustrates a block diagram of the inland port 107 connected by the hyperloop route 105 as part of the hyperloop system 102. A highway 127 may be disposed between a first plurality of hyperloop vehicle bays 123N and a plurality of hyperloop vehicle bays 125N. The highway 127 may have a first street 129A connecting the plurality of hyperloop vehicle bays 123N to the highway 127. Further, the highway 127 may be connected to a second street 129B that is connected to the plurality of hyperloop vehicle bays 125N. The streets 129A, 129B may take any form of ground-based transportation, including dirt road, freeway, highway, rail, light rail, high-speed rail, barge, ferry, subway, tram, etc. In one aspect, the highway 127 may be a traditional rail, and the streets 129A, 129B may be branches of the traditional rail. In the instant disclosure, trucks and roads shall be often employed in the description, but one of skill in the art will appreciate how other modes of transportation may perform similar functionality to trucks and roads.

For purposes of illustration and to frame the instant solution in terms of the aforementioned problems to be solved, the highway 127 may be considered a higher-speed road when compared to those disposed at the seaport 101. For example, the seaport 101 may have roadways to support legacy operations. Such roadways are considered low-speed when compared with the highway 127. In general, truck operators prefer higher speeds and thus the highway 127 is more attractive for travel (than those at the seaport 101, for example).

A truck 147 is shown on the highway 127. The truck 147 may represent any ground-based vehicle including: a train, a trolley, a tram, a subway, a car, a motorcycle, a high-speed train, a light rail vehicle, a bus, etc. One of skill in the art will appreciate that many traditional, ground-based modes serve substantially similar purposes. As such, the truck 147 may be alternatively embodied without departing from the disclosed solution.

The plurality of hyperloop vehicle bays 123N may have a first hyperloop vehicle bay 123A. The plurality of hyperloop vehicle bays 125N may have a first hyperloop vehicle bay 125A. The fleet management center 145 may be configured to manage and operate the plurality of hyperloop vehicle bays 125N. For instance, the fleet management center 145 may communicate wirelessly with the truck 147 in order to instruct the driver to approach the hyperloop vehicle bay 123A to receive waiting cargo. One advantage of the fleet management center 145 is the capability of predicting the states of the various elements in the hyperloop system 102. In this specific situation, the fleet management center 145 may be aware of the position of the hyperloop vehicle 110 and configured to notify the truck 147 to approach the inland port 107 at a time substantially synchronized with the arrival of the hyperloop vehicle 110.

Turning back to the example described in FIG. 2A above, the hyperloop vehicle 110 carrying cargo from the receiving berth 113C may continue from the waypoint 135B toward the hyperloop vehicle bay 123A at which point the hyperloop vehicle 110 stops at the hyperloop vehicle bay 123A. A tractor may autonomously carry the cargo from the hyperloop vehicle bay 123A to the truck 147 waiting near the street 129A. The fleet management center 145 may direct the tractor to proceed with autonomous operations that are managed at the fleet management center 145 in order to move the cargo. The truck 147 may then depart along the street 129A and onto the highway 127 in order to reach the ultimate destination of the truck 147 and/or the cargo. The fleet management center 145 may then notify other third-party elements of the arrival of the truck 147 (e.g., notifying a receiving warehouse of the estimated departure time of the truck 147).

The hyperloop vehicle 110 may return to the hyperloop route 105 and move toward the hyperloop vehicle bay 125A. At the hyperloop vehicle bay 125A, the hyperloop vehicle 110 may stop using autonomous operations, that may be managed at the hyperloop vehicle 110, the fleet management center 145, or a combination thereof. The truck 147 may then approach the hyperloop vehicle bay 125A via the street 129B. Once the truck 147 arrives, the fleet management center 145 may cause a tractor (or crane) to extract cargo from the truck 147 and place the cargo into the hyperloop vehicle 110 that is waiting at the hyperloop vehicle bay 125A. The hyperloop vehicle 110 may then return to the hyperloop route 105 and move toward the plurality of hyperloop vehicle bays 103N located at the seaport 101, where the cargo will ultimately be delivered.

One of skill in the art will appreciate that the hyperloop vehicle 110 is able to make many efficient trips along the hyperloop route 105 such that the hyperloop vehicle 110 is moving cargo during much of the journey. With a high number of hyperloop vehicles moving along the hyperloop route 105, the throughput of the seaport 101 and the inland port 107 may be increased to meet demand. Likewise, the number of hyperloop vehicles dedicated to the hyperloop route 105 may be reduced based on reduced demand for transporting cargo, thus generating an equilibrium between supply and demand of hyperloop vehicles.

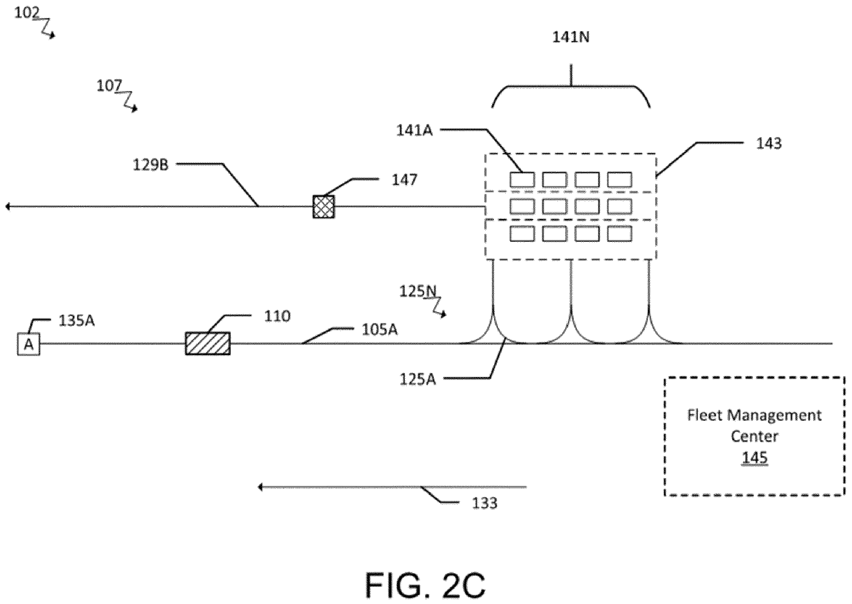

**FIG. 2C** illustrates a block diagram of the inland port 107 equipped with a cargo storage facility 141N having a first shipping container 141A, all of which are part of the hyperloop system 102. The cargo storage facility 141N may have any number of shipping containers similar to the shipping container 141A. Such additional shipping containers are depicted in the instant figure without labels for the purpose of clarity. One of skill in the art will appreciate that substantially similar elements in the instant figure are substantially similar in design and functionality.

A tractor 143 may be disposed such that the shipping container 141A may be transported to and from the plurality of hyperloop vehicle bays 125N (serviced by the hyperloop vehicle 110). The tractor 143 may be autonomously managed from the fleet management center 145. For instance, the fleet management center 145 may instruct the driver of the truck 147 to approach the tractor 143 while autonomous systems engage the tractor 143 to retrieve the shipping container 141A. Next, the systems at the fleet management center 145 may transfer the shipping container 141A to the truck 147 in order for the cargo to proceed along street 129B.

One of skill in the art will appreciate that the plurality of hyperloop vehicle bays 125N may or may not having a storage facility 141N. In one aspect, the plurality of hyperloop vehicle bays 125N may be configured to directly load cargo into the hyperloop vehicle 110 such that minimal storage of containers is required (thus eliminating the need for the cargo storage facility 141N). The cargo storage facility 141N may be connected via the street 129B.

One of skill in the art will appreciate that the shipping container 141A may actually be a plurality of shipping containers stacked on top of one another. In one aspect, the tractor 143 may be configured to store the shipping container 141A in a stack. Further, the tractor 143 may be configured to retrieve the shipping container 141A from the stack.

In one example, the truck 147 may travel along the street 129B toward the hyperloop vehicle bay 125A, and the truck 147 may be carrying the shipping container 141A having cargo therein. The truck 147 may, with the assistance of the tractor 143, unload the shipping container 141A from the truck 147 and into the cargo storage facility 141N. The truck 147 may then depart along the street 129B. At a later point, the hyperloop vehicle 110 may arrive at the hyperloop vehicle bay 125A and stop (or significantly slow down). The shipping container 141A may then be retrieved by the tractor 143 and then loaded into the hyperloop vehicle 110 waiting at the hyperloop vehicle bay 125A. Once the shipping container 141A is loaded, the hyperloop vehicle 110 may then depart along the direction of travel 133 toward the seaport 101.

In one aspect, the fleet management center 145 may store and read instructions encoded in the shipping container 141A. By enabling data to be read from the shipping container 141A itself, the hyperloop system 102 provides a means for other fleet management centers to understand the contents, destination, dimensions, etc. of the shipping container 141A without directly communicating with another fleet management center (e.g., the fleet management center 145). Therefore, the shipping container 141A may be encoded with information at a very remote location (e.g., Singapore) to be read by the fleet management center 145 (e.g., located in the United States).

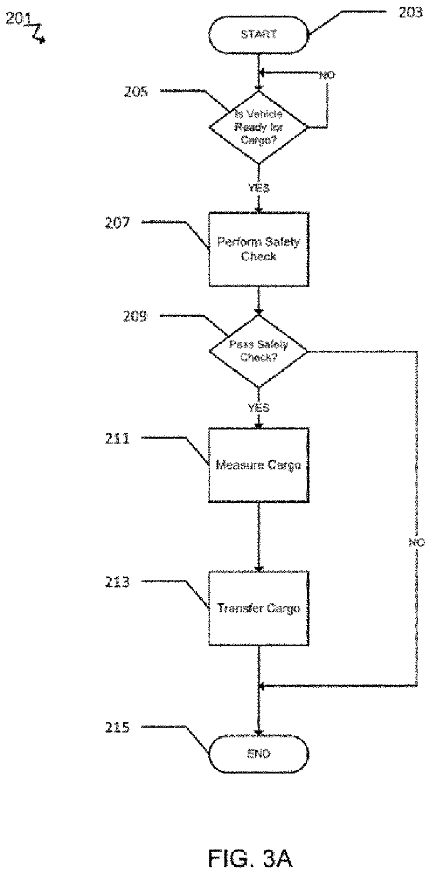

**FIG. 3A** illustrates a process 201 for transferring cargo to or from the hyperloop vehicle 110. The process 201 shall be described with reference to the figures above; however, one of skill in the art will understand that such particular reference is merely illustrative and not limiting. The process 201 may be stored and executed by the fleet management center 145. For example, the process 201 may be part of a suite of autonomous systems configured to manage the logistics and operations of the hyperloop system 102 as an integrated whole.

The process 201 begins at the start block 203 and proceeds toward the decision block 205. At the decision block 205, the process 201 determines whether the hyperloop vehicle 110 is ready for cargo at the hyperloop vehicle bay 103A. The determination in the decision block 205 may be made based on the hyperloop vehicle 110 being ready to receive cargo or based on the hyperloop vehicle 110 being ready to unload cargo (e.g., at the sending berth 115D). For example, the fleet management center 145 may query the hyperloop vehicle 110 for the current weight of cargo in order to calculate whether the hyperloop vehicle 110 is prepared to carry additional cargo and/or unload cargo.

One of skill in the art will appreciate that the determination in the decision block 205 may be based on a subset of cargo capacity being operable for transfer of cargo. For example, the hyperloop vehicle 110 may have five hundred kilograms of carrying capacity. If the hyperloop vehicle 110 is laden with two-hundred kilograms already, the fleet management center 145 may inform autonomous systems that the hyperloop vehicle 110 has a remaining capacity of three-hundred kilograms.

If the hyperloop vehicle 110 is not ready for cargo transfer, the process 201 proceeds along the NO branch and returns to the determination block 205 to await a ready hyperloop vehicle. For example, the hyperloop vehicle 110 may already be undertaking loading or unloading operations, thus being unavailable for additional operations at the current interval. The fleet management center 145 may generate an estimate of when the hyperloop vehicle 110 may be ready to accept autonomous commands (e.g., when the unloading operation is complete).

If the hyperloop vehicle 110 is ready for cargo transfer, the process 201 continues toward the block 207. At the block 207, the process 201 performs a safety check to determine whether cargo may be safely transferred between the plurality of tractors (not labeled) at the plurality of berths 109A. The safety check may entail a number of tests and checks including, but not limited to, determining the integrity of the shipping container, determining the integrity of the hyperloop vehicle 110, ensuring proper packing of the cargo within the shipping container, ensuring detected personnel are safe during the transfer, checking sensors along pathways within the seaport 101 (or the inland port 107), determining current cargo capacity of the hyperloop vehicle 110 as being valid, determining an estimated cargo capacity conforming to safety limits, estimating safe departure times, estimating safe arrival times, determining safe braking distances, etc. One of skill in the art will appreciate that the many existing safety checks in the transportation industry (including hyperloop) may be applied in the solution described herein. The process 201 then proceeds to the decision block 209.

At the decision block 209, the process 201 determines whether the safety check has passed. If the safety check has not passed, the process 201 proceeds along the NO branch toward the end block 215 where the process 201 terminates. The fleet management center 145 may be used by the process 201 to command the hyperloop vehicle 110 in order to address the failed safety check. For example, the process 201 may command the hyperloop vehicle 110 to autonomously enter a stable and await maintenance operations by skilled technicians and equipment. In one aspect, the process 201 may communicate the failed safety check to other hyperloop vehicles in the hyperloop system 102 (e.g., upstream hyperloop vehicles).

Returning to the decision block 209, if the safety check passes, the process 201 proceeds along the YES branch toward the block 211. At the block 211, the process 201 measures the cargo and/or the shipping container. In one aspect, the measuring may be a weighing procedure to determine the requirements of the tractor (e.g., the plurality of tractors 117N), the hyperloop vehicle 110, the truck 147, the hyperloop route 105, etc. In another aspect, the measuring may be to determine the physical dimensions of the shipping container given the many standard sizes of shipping containers used worldwide. For example, if the hyperloop vehicle 110 is not configured to handle the dimensions of the cargo container, the fleet management center 145 may note the exception and inform other autonomous systems in the hyperloop system 102. The process 201 then proceeds to the block 213.

At the block 213, the cargo is transferred between the hyperloop vehicle 110 and the seaport 101 or the inland port 107, depending on the location of the hyperloop vehicle 110. In one aspect, the cargo is placed into the hyperloop vehicle 110. In another aspect, the cargo is extracted from the hyperloop vehicle 110. Autonomously operated tractors (e.g., the plurality of tractors 117N) may perform the transfer operations under control of the fleet management center 145. The process 201 then proceeds to the end block 215 and terminates.

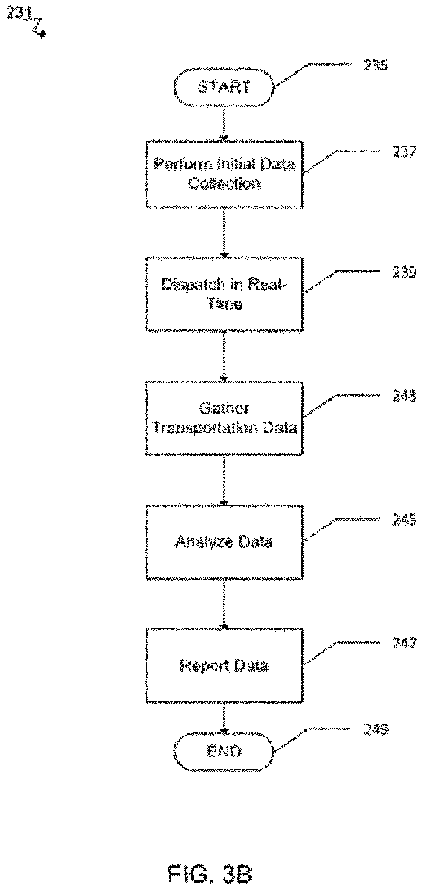

**FIG. 3B** illustrates a process 231 for transporting cargo within the hyperloop system 102. The process 231 may operate in coordination with the process 201 described in **FIG. 3A** above. The fleet management center 145 may manage the storage and execution of the process 231. For example, autonomous systems in the fleet management center 145 may rely on the operations of the process 231 to carry out the transportation of cargo between the seaport 101 and the inland port 107.

The process 231 begins at the start block 235 and proceeds to the block 237. At the block 237, the process 231 performs initial data collection. The data collection may be gathering information relating to the weight of the shipping container, the dimensions of the shipping container (e.g., the shipping container 141A), the availability of hyperloop vehicles (e.g., the hyperloop vehicle 110), the availability of trucks (e.g., the truck 147), the availability of autonomous tractors (e.g., the plurality of tractors 117N), the current cargo capacity of the hyperloop vehicles (e.g., the hyperloop vehicle 110), etc. Said data collection may be controlled by the fleet management center 145 such that collected data may be utilized at the seaport 101, the inland port 107, or a combination thereof. The collected data may be presented to human operators at the fleet management center 145 in order to inform human-based decisions related to the hyperloop system 102 operations. The process 231 then proceeds to the block 239.

At the block 239, the process 231 may perform real-time, autonomous dispatching. The real-time, autonomous dispatching may determine which hyperloop vehicles (e.g., the hyperloop vehicle 110) may be sent to which hyperloop vehicle bays (e.g., the plurality of hyperloop vehicle bays 103N). The real-time, autonomous dispatching may allocate available tractors (e.g., the plurality of tractors 117N) to transfer cargo. The fleet management center 145 may send and receive autonomous commands addressed at the hyperloop vehicles (e.g., the hyperloop vehicle 111). Once the necessary hyperloop vehicles, tractors, trucks, ships, etc. have been dispatched, the process 231 then proceeds to the block 243.

At the block 243, the process 231 gathers transportation data relating to the in-flight operation of the hyperloop vehicle 110 carrying or preparing to carry cargo (e.g., the shipping container 141A). For example, the number of stops the hyperloop vehicle 110 makes may be collected such that the fleet management center 145 (which manages the hyperloop route 105) may determine changes to further optimize the efficiency of the cargo transfers within the seaport 101 and/or the inland port 107. In another example, the data gathered may relate to the average weight carried by the hyperloop vehicle 110 as measured over a defined time interval. In one aspect, the data gathering may be informed by analytics used by the fleet management center 145 to refine and improve the functionality of the process 201, 231. The process 231 then proceeds to the block 245.

At the block 245, the data gathered at the block 237, 243 may be analyzed by the process 231. In one aspect, the process 231 creates data from the data, often referred to as analytics or metadata. Such analytics may be used by human personnel to make decisions relating to any number of aspects relating to the solution disclosed herein. For example, analytics may be a heat map that is overlayed on a logical map (similar to the ones shown in **FIGs. 2A-2C**). In another example, the analytics may be graphs showing the peak utilization hours of the hyperloop route 105. One of skill in the art will appreciate that such analytics may be used in a feedback loop such that the hyperloop system 102 (as managed by the fleet operations center 145) optimizes further operations of the process 231 (and, in some aspects the process 201).

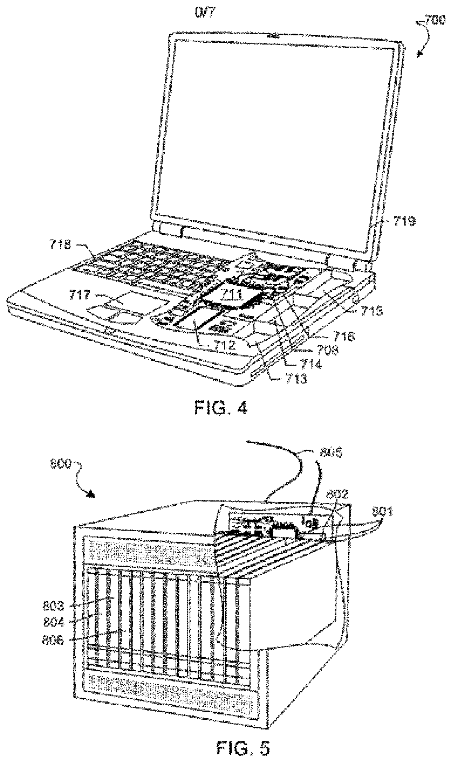

**FIG. 4** is a block diagram illustrating an example computing device 700 suitable for use with the various aspects described herein. The computing device 700 is depicted and may configured to carry out the operations and processes described herein (e.g., the processes 201, 231). Further, the computing device 700 may be configured to manage the hyperloop system 102. Still further, the computing device 700 may be disposed at or near the fleet management center 145 such that the autonomous systems described herein may control the hyperloop system 102.

The computing device 700 may include a processor 711 (e.g., an ARM processor) coupled to volatile memory 712 (e.g., DRAM) and a large capacity nonvolatile memory 713 (e.g., a flash device). Additionally, the computing device 700 may have one or more antenna 708 for sending and receiving electromagnetic radiation that may be connected to a wireless data link and/or cellular telephone transceiver 716 coupled to the processor 711. The computing device 700 may also include an optical drive 714 and/or a removable disk drive 715 (e.g., removable flash memory) coupled to the processor 711. The computing device 700 may include a touchpad touch surface 717 that serves as the computing device's 700 pointing device, and thus may receive drag, scroll, flick etc. gestures similar to those implemented on computing devices equipped with a touch screen display as described above. In one aspect, the touch surface 717 may be integrated into one of the computing device's 700 components (e.g., the display). In one aspect, the computing device 700 may include a keyboard 718 which is operable to accept user input via one or more keys within the keyboard 718. In one configuration, the computing device's 700 housing includes the touchpad 717, the keyboard 718, and the display 719 all coupled to the processor 711. Other configurations of the computing device 700 may include a computer mouse coupled to the processor (e.g., via a USB input) as are well known, which may also be used in conjunction with the various aspects described herein.

**FIG. 5** is a block diagram illustrating a server 800 suitable for use with the various aspects described herein. The server 800 is depicted and may be configured to carry out the operations described herein (e.g., the processes 201, 231). Further, the server 800 may be configured to manage the hyperloop system 102. Still further, the server 800 may be disposed at or near the fleet management center 145 such that the autonomous systems described herein may control the hyperloop system 102.

The server 800 may include one or more processor assemblies 801 (e.g., an x86 processor) coupled to volatile memory 802 (e.g., DRAM) and a large capacity nonvolatile memory 804 (e.g., a magnetic disk drive, a flash disk drive, etc.). As illustrated in instant figure, processor assemblies 801 may be added to the server 800 by inserting them into the racks of the assembly. The server 800 may also include an optical drive 806 coupled to the processor 801. The server 800 may also include a network access interface 803 (e.g., an ethernet card, WIFI card, etc.) coupled to the processor assemblies 801 for establishing network interface connections with a network 805. The network 805 may be a local area network, the Internet, the public switched telephone network, and/or a cellular data network (e.g., LTE, 5G, etc.).

The foregoing method descriptions and diagrams/figures are provided merely as illustrative examples and are not intended to require or imply that the operations of various aspects must be performed in the order presented. As will be appreciated by one of skill in the art, the order of operations in the aspects described herein may be performed in any order. Words such as "thereafter," "then," "next," etc. are not intended to limit the order of the operations; such words are used to guide the reader through the description of the methods and systems described herein. Further, any reference to claim elements in the singular, for example, using the articles "a," "an," or "the" is not to be construed as limiting the element to the singular.

Various illustrative logical blocks, modules, components, circuits, and algorithm operations described in connection with the aspects described herein may be implemented as electronic hardware, computer software, or combinations of both. To clearly illustrate this interchangeability of hardware and software, various illustrative components, blocks, modules, circuits, operations, etc. have been described herein generally in terms of their functionality. Whether such functionality is implemented as hardware or software depends upon the particular application and design constraints imposed on the overall system. One of skill in the art may implement the described functionality in varying ways for each particular application, but such implementation decisions should not be interpreted as causing a departure from the scope of the claims.

The hardware used to implement various illustrative logics, logical blocks, modules, components, circuits, etc. described in connection with the aspects described herein may be implemented or performed with a general purpose processor, a digital signal processor ("DSP"), an application specific integrated circuit ("ASIC"), a field programmable gate array ("FPGA") or other programmable logic device, discrete gate logic, transistor logic, discrete hardware components, or any combination thereof designed to perform the functions described herein. A general-purpose processor may be a microprocessor, a controller, a microcontroller, a state machine, etc. A processor may also be implemented as a combination of receiver smart objects, e.g., a combination of a DSP and a microprocessor, a plurality of microprocessors, one or more microprocessors in conjunction with a DSP core, or any other such like configuration. Alternatively, some operations or methods may be performed by circuitry that is specific to a given function.

In one or more aspects, the functions described may be implemented in hardware, software, firmware, or any combination thereof. If implemented in software, the functions may be stored as one or more instructions (or code) on a non-transitory computer-readable storage medium or a non-transitory processor-readable storage medium. The operations of a method or algorithm disclosed herein may be embodied in a processor-executable software module or as processor-executable instructions, both of which may reside on a non-transitory computer-readable or processor-readable storage medium. Non-transitory computer-readable or processor-readable storage media may be any storage media that may be accessed by a computer or a processor (e.g., RAM, flash, etc.). By way of example but not limitation, such non-transitory computer-readable or processor-readable storage media may include RAM, ROM, EEPROM, NAND FLASH, NOR FLASH, M-RAM, P-RAM, R-RAM, CD-ROM, DVD, magnetic disk storage, magnetic storage smart objects, or any other medium that may be used to store program code in the form of instructions or data structures and that may be accessed by a computer. Disk as used herein may refer to magnetic or non-magnetic storage operable to store instructions or code. Disc refers to any optical disc operable to store instructions or code. Combinations of any of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

The preceding description of the disclosed aspects is provided to enable any person skilled in the art to make, implement, or use the claims. Various modifications to these aspects will be readily apparent to those skilled in the art, and the generic principles defined herein may be applied to other aspects without departing from the scope of the claims. Thus, the present disclosure is not intended to be limited to the aspects illustrated herein but is to be accorded the widest scope consistent with the claims disclosed herein.

Various aspects of the invention are also defined by the following clauses:
1. A method of transporting cargo using a hyperloop system having at least one hyperloop route, the method comprising:
   a. determining, at a processor, availability of a hyperloop vehicle to transfer a first cargo shipping container located at a first location;
   b. dispatching, at the processor, the hyperloop vehicle, via the hyperloop route, to a first hyperloop vehicle bay proximate to the first location, the first hyperloop vehicle bay being proximate to a first tractor;
   c. determining, at the processor, availability of the first tractor to transfer the first cargo shipping container between the first tractor and the hyperloop vehicle;
   d. dispatching, at the processor, the first tractor to transfer the first cargo shipping container between the hyperloop vehicle and the first tractor;
   e. dispatching, at the processor, the hyperloop vehicle, via the hyperloop route, to a second hyperloop vehicle bay proximate to a second location, the second hyperloop vehicle bay being proximate to a second tractor;
   f. determining, at the processor, availability of the second tractor to transfer the first cargo shipping container between the second tractor and the hyperloop vehicle;
   g. dispatching, at the processor, the second tractor to transfer the first cargo shipping container between the second tractor and the hyperloop vehicle; and
   h. dispatching, at the processor, the hyperloop vehicle along the hyperloop route.
2. The method of clause 1, wherein the hyperloop vehicle is configured to receive dispatching commands to invoke autonomous operations within the hyperloop vehicle.
3. The method of clause 1, wherein the first tractor and the second tractor are configured to receive dispatching commands to invoke autonomous operations within the first tractor and the second tractor, respectively.
4. The method of clause 1, wherein the determining availability of the hyperloop vehicle further comprises performing a safety check of the hyperloop vehicle; and notifying a fleet management center if the safety check fails to pass.
5. The method of clause 1, wherein the first location is a seaport and the second location is an inland port.
6. The method of clause 1, further comprising gathering, at the processor, data related to the transporting of the first cargo shipping container via the hyperloop route; storing the data in a memory; generating, at the processor, analytic data on said data; and presenting the analytic data on a computer display.
7. The method of clause 1, wherein the transferring performed by the first tractor is to load cargo into the hyperloop vehicle, further wherein the transferring performed by the second tractor is to unload cargo from the hyperloop vehicle.
8. The method of clause 1, further comprising determining, at the processor, the availability of the first cargo shipping container based on data contained within the first cargo shipping container, the data being indicative of contents inside the first cargo shipping container, the weight of the first cargo shipping container, the dimensions of the first cargo shipping container, the destination of the first cargo shipping container, or a combination thereof.
9. The method of clause 8, wherein the determining of the availability of the hyperloop vehicle is based on a carrying capacity of the hyperloop vehicle.
10. The method of clause 1, the method further comprising dispatching the first tractor to store the first cargo shipping container at a first cargo storage facility if the hyperloop vehicle is determined to be unavailable, the cargo storage facility being proximate to the first tractor; and dispatching the second tractor to store the first cargo shipping container at a second cargo storage facility if a truck is determined to be unavailable to receive the first cargo shipping container.
11. A server configured to manage the transporting of cargo using a hyperloop system having at least one hyperloop route, the server comprising a memory; a display; and a processor, the processor being configured to: determine availability of a hyperloop vehicle to transfer a first cargo shipping container located at a first location; dispatch the hyperloop vehicle, via the hyperloop route, to a first hyperloop vehicle bay proximate to the first location, the first hyperloop vehicle bay being proximate to a first tractor; determine availability of the first tractor to transfer the first cargo shipping container between the first tractor and the hyperloop vehicle; dispatch the first tractor to transfer the first cargo shipping container between the hyperloop vehicle and the first tractor; dispatch the hyperloop vehicle, via the hyperloop route, to a second hyperloop vehicle bay proximate to a second location, the second hyperloop vehicle bay being proximate to a second tractor; determine availability of the second tractor to transfer the first cargo shipping container between the second tractor and the hyperloop vehicle; dispatch the second tractor to transfer the first cargo shipping container between the second tractor and the hyperloop vehicle; and dispatch the hyperloop vehicle along the hyperloop route.
12. The server of clause 11, wherein the hyperloop vehicle is configured to receive dispatching commands to invoke autonomous operations within the hyperloop vehicle.
13. The server of clause 11, wherein the first tractor and the second tractor are configured to receive dispatching commands to invoke autonomous operations within the first tractor and the second tractor, respectively.
14. The server of clause 11, wherein the determining availability of the hyperloop vehicle further comprises: performing a safety check of the hyperloop vehicle; and notifying, at the display, if the safety check fails to pass.
15. The server of clause 11, wherein the first location is a seaport and the second location is an inland port.
16. The server of clause 11, wherein the processor is further configured to: gather data related to the transporting of the first cargo shipping container via the hyperloop route; store the data in the memory; generate analytic data on said data; and present the analytic data on the display.
17. The server of clause 11, wherein the transferring performed by the first tractor is to load cargo into the hyperloop vehicle, further wherein the transferring performed by the second tractor is to unload cargo from the hyperloop vehicle.
18. The server of clause 11, wherein the processor is further configured to: determine the availability of the first cargo shipping container based on data contained within the first cargo shipping container, the data being indicative of contents inside the first cargo shipping container, the weight of the first cargo shipping container, the dimensions of the first cargo shipping container, the destination of the first cargo shipping container, or a combination thereof.
19. The server of clause 18, wherein the determining of the availability of the hyperloop vehicle is based on a carrying capacity of the hyperloop vehicle.
20. The server of clause 11, wherein the processor is further configured to: dispatch the first tractor to store the first cargo shipping container at a first cargo storage facility if the hyperloop vehicle is determined to be unavailable, the cargo storage facility being proximate to the first tractor; and dispatch the second tractor to store the first cargo shipping container at a second cargo storage facility if a truck is determined to be unavailable to receive the first cargo shipping container.
21. A computer-readable medium storing instructions that, when executed by a computer, cause the computer to: determine availability of a hyperloop vehicle to transfer a first cargo shipping container located at a first location; dispatch the hyperloop vehicle, via the hyperloop route, to a first hyperloop vehicle bay proximate to the first location, the first hyperloop vehicle bay being proximate to a first tractor; determine availability of the first tractor to transfer the first cargo shipping container between the first tractor and the hyperloop vehicle; dispatch the first tractor to transfer the first cargo shipping container between the hyperloop vehicle and the first tractor; dispatch the hyperloop vehicle, via the hyperloop route, to a second hyperloop vehicle bay proximate to a second location, the second hyperloop vehicle bay being proximate to a second tractor; determine availability of the second tractor to transfer the first cargo shipping container between the second tractor and the hyperloop vehicle; dispatch the second tractor to transfer the first cargo shipping container between the second tractor and the hyperloop vehicle; and dispatch the hyperloop vehicle along the hyperloop route.

## Claims

1. A method of transporting cargo using a hyperloop system having at least one hyperloop route, the method comprising:
determining, at a processor, availability of a hyperloop vehicle to transfer a first cargo shipping container located at a first location, particularly a seaport [see claim 4];
dispatching, at the processor, the hyperloop vehicle, via the hyperloop route, to a first hyperloop vehicle bay proximate to the first location, the first hyperloop vehicle bay being proximate to a first tractor;
determining, at the processor, availability of the first tractor to transfer the first cargo shipping container between the first tractor and the hyperloop vehicle;
dispatching, at the processor, the first tractor to transfer the first cargo shipping container between the hyperloop vehicle and the first tractor;
dispatching, at the processor, the hyperloop vehicle, via the hyperloop route, to a second hyperloop vehicle bay proximate to a second location, particularly an inland port [see claim 4], the second hyperloop vehicle bay being proximate to a second tractor;
determining, at the processor, availability of the second tractor to transfer the first cargo shipping container between the second tractor and the hyperloop vehicle;
dispatching, at the processor, the second tractor to transfer the first cargo shipping container between the second tractor and the hyperloop vehicle; and
dispatching, at the processor, the hyperloop vehicle along the hyperloop route.

2. The method of claim 1, wherein the hyperloop vehicle is configured to receive dispatching commands to invoke autonomous operations within the hyperloop vehicle.

3. The method of claim 1, wherein the first tractor and the second tractor are configured to receive dispatching commands to invoke autonomous operations within the first tractor and the second tractor, respectively.

4. The method of claim 1, wherein the determining availability of the hyperloop vehicle further comprises:
performing a safety check of the hyperloop vehicle; and
notifying a fleet management center if the safety check fails to pass.

5. The method of claim 1, further comprising:
gathering, at the processor, data related to the transporting of the first cargo shipping container via the hyperloop route;
storing the data in a memory;
generating, at the processor, analytic data on said data; and
presenting the analytic data on a computer display.

6. The method of claim 1, wherein the transferring performed by the first tractor is to load cargo into the hyperloop vehicle, further wherein the transferring performed by the second tractor is to unload cargo from the hyperloop vehicle.

7. The method of claim 1, further comprising:
determining, at the processor, the availability of the first cargo shipping container based on data contained within the first cargo shipping container, the data being indicative of contents inside the first cargo shipping container, the weight of the first cargo shipping container, the dimensions of the first cargo shipping container, the destination of the first cargo shipping container, or a combination thereof.

8. The method of claim 7, wherein the determining of the availability of the hyperloop vehicle is based on a carrying capacity of the hyperloop vehicle.

9. The method of claim 1, the method further comprising:
dispatching the first tractor to store the first cargo shipping container at a first cargo storage facility if the hyperloop vehicle is determined to be unavailable, the cargo storage facility being proximate to the first tractor; and
dispatching the second tractor to store the first cargo shipping container at a second cargo storage facility if a truck is determined to be unavailable to receive the first cargo shipping container.

10. A server configured to manage the transporting of cargo using a hyperloop system having at least one hyperloop route, the server comprising:
a memory;
a display; and
a processor, the processor being configured to:
determine availability of a hyperloop vehicle to transfer a first cargo shipping container located at a first location, particularly a seaport;
dispatch the hyperloop vehicle, via the hyperloop route, to a first hyperloop vehicle bay proximate to the first location, the first hyperloop vehicle bay being proximate to a first tractor;
determine availability of the first tractor to transfer the first cargo shipping container between the first tractor and the hyperloop vehicle;
dispatch the first tractor to transfer the first cargo shipping container between the hyperloop vehicle and the first tractor;
dispatch the hyperloop vehicle, via the hyperloop route, to a second hyperloop vehicle bay proximate to a second location, particularly an inland port, the second hyperloop vehicle bay being proximate to a second tractor;
determine availability of the second tractor to transfer the first cargo shipping container between the second tractor and the hyperloop vehicle;
dispatch the second tractor to transfer the first cargo shipping container between the second tractor and the hyperloop vehicle; and
dispatch the hyperloop vehicle along the hyperloop route.

11. The server of claim 10, wherein the hyperloop vehicle is configured to receive dispatching commands to invoke autonomous operations within the hyperloop vehicle; or wherein the first tractor and the second tractor are configured to receive dispatching commands to invoke autonomous operations within the first tractor and the second tractor, respectively.

12. The server of claim 10, wherein the processor is further configured to:
gather data related to the transporting of the first cargo shipping container via the hyperloop route;
store the data in the memory;
generate analytic data on said data; and
present the analytic data on the display.

13. The server of claim 10, wherein the transferring performed by the first tractor is to load cargo into the hyperloop vehicle, further wherein the transferring performed by the second tractor is to unload cargo from the hyperloop vehicle.

14. The server of claim 10, wherein the processor is further configured to:
determine the availability of the first cargo shipping container based on data contained within the first cargo shipping container, the data being indicative of contents inside the first cargo shipping container, the weight of the first cargo shipping container, the dimensions of the first cargo shipping container, the destination of the first cargo shipping container, or a combination thereof; wherein the determining of the availability of the hyperloop vehicle is optionally based on a carrying capacity of the hyperloop vehicle.

15. The server of claim 10, wherein the processor is further configured to:
dispatch the first tractor to store the first cargo shipping container at a first cargo storage facility if the hyperloop vehicle is determined to be unavailable, the cargo storage facility being proximate to the first tractor; and
dispatch the second tractor to store the first cargo shipping container at a second cargo storage facility if a truck is determined to be unavailable to receive the first cargo shipping container.
